# EUROPÄISCHE PATENTANMELDUNG

(11) **EP 1 394 917 A1**
(43) Veröffentlichungstag der Anmeldung: **03.03.2004**
(21) Anmeldenummer: 03017254.8
(22) Anmeldetag: 30.07.2003
(51) Int. Cl.: H02G 3/12

(54) **Geräteeinbaukanal**

(30) Priorität: 28.08.2002 DE 20213213 U
(71) Anmelder: Tehalit GmbH & Co. KG, 67716 Heltersberg (DE)
(72) Erfinder: Kauf, Peter, 66482 Zweibrücken (DE); Schneckmann, Horst, 67705 Trippstadt (DE); Gouth, Fernand, 57410 Rohrbach-les-Bitche (FR)
(74) Vertreter: Patentanwälte Möll und Bitterich

(57) **Zusammenfassung**

Das Unterteil eines Geräteeinbaukanals mit etwa C-förmigem Querschnitt besitzt einen Boden (10), zwei Seitenwände (12) und zur Mitte hin abgewinkelte Schenkel (13), an deren freien Enden Deckelhalteprofile (14) angeformt sind. Geräteeinbaudosen (1) oder Elektroinstallationsgeräte werden an Halteleisten (11) an der Innenseite des Bodens (10) montiert. Der Abstand zwischen den Deckelhalteprofilen (14) entspricht der Breite der Geräteeinbaudosen (1) bzw. Installationsgeräte. Um das Einlegen und Herausnehmen von elektrischen Leitungen und Kabeln zu erleichtern, sind die Schenkel (13) zumindest teilweise schwenkbar angelenkt, beispielsweise mittels Filmscharnier (15). Zusätzlich kann zwischen Seitenwand (12) und Schenkel (13) eine Haltekette (16, 17, 18, 19) angebracht werden, die vorzugsweise einen Schnappeffekt aufweist, so dass die Schenkel (13) jeweils die geöffnete oder geschlossene Endstellung einnehmen und beibehalten.

## Beschreibung

Die Erfindung betrifft Geräteeinbaukanäle mit Unterteilen, die einen etwa C-förmigen Querschnitt besitzen, gemäß dem Oberbegriff des Anspruchs 1.

Für den Einbau von Installationsgeräten wie Dosen, Steckdosen, Schalter, Sicherungen, Elektronikmodulen usw. bestimmte Kanäle werden seit vielen Jahrzehnten in großen Stückzahlen weltweit hergestellt, montiert und benutzt. Diese Geräteeinbaukanäle bestehen aus einem Kanalunterteil und einem oder mehreren Deckeln, die auf das Kanalunterteil lösbar aufgerastet werden können.

Die Kanalunterteile gibt es mit einem U-förmigen oder mit einem C-förmigen Querschnitt. Kanalunterteile mit U-förmigem Querschnitt haben den Vorteil, dass nach der Montage der Installationsgeräte der Raum zwischen Installationsgerät und Seitenwand zum Verlegen von Kabeln und Leitungen frei zugänglich ist. Zum Verschließen des Kanalunterteils nach Beendigung der Montagearbeiten müssen jedoch entweder ein spezieller, mit einem geeigneten Ausschnitt zu versehender Deckel oder mehrere, üblicherweise drei Deckel verwendet werden. Sowohl das Herstellen der Deckelausschnitte als auch die Montage von drei Deckeln ist mit einem zusätzlichen Zeit- und Kostenaufwand verbunden.

Nicht zuletzt aus diesem Grund sind auch Geräteeinbaukanäle mit C-förmigem Querschnitt in Gebrauch. Diese benötigen nur einen zentralen Deckel, der schnell montiert ist und der ohne individuelle Ausschnitte für einzubauende Geräte verwendet werden kann. Um das Verlegen von Kabeln und Leitungen zu ermöglichen, wenn die Installationsgeräte bereits montiert sind, muss zwischen Installationsgerät und dem Ende der nach innen gezogenen Seitenwand, wo üblicherweise das Deckelhalteprofil angeformt ist, ein entsprechender Spalt oder Abstand eingehalten werden. Dies hat zur Folge, dass diese Geräteeinbaukanäle derzeit nur dann bequem und schnell mit Leitungen bestückt werden können, wenn der Kanaldeckel deutlich breiter ist als die Einbaugeräte. Das ist unbefriedigend.

Der vorliegenden Erfindung liegt daher die Aufgabe zugrunde, Geräteeinbaukanäle mit C-förmigem Querschnitt anzugeben, die auch in kleinen Breiten gefertigt werden können, bei denen also zwischen den montierten Installationsgeräten und den Deckelhalteprofilen an den Enden der nach innen gezogenen Seitenwände praktisch kein Abstand besteht, und die trotzdem das bequeme Verlegen von Kabeln und Leitungen ermöglichen.

Diese Aufgabe wird gelöst durch einen Geräteeinbaukanal mit den Merkmalen des Anspruchs 1.

Dank der vorliegenden Erfindung kann der Installateur durch Aufklappen der beweglichen Schenkel Kabel und Leitungen auch dann problemlos verlegen, wenn die Installationsgeräte bereits montiert sind. Das Abnehmen und Aufrasten der seitlichen Deckel entfällt. Deckel können nicht mehr verloren gehen. Die Verlegearbeiten sind mit minimalem Zeitaufwand erledigt.

Gemäß einer vorteilhaften Ausgestaltung der Erfindung sind die beweglichen Schenkel mittels Filmscharnier angelenkt.

Zur besseren Stabilisierung der beweglichen Schenkel kann im Bereich des Deckelhalteprofils ein zusätzliches Halteprofil vorgesehen werden, welches beispielsweise mit den Installationsgeräten, im Kanal montierten Trennwänden oder dergleichen kooperiert.

Eine weitere Verbesserung ist möglich, wenn zwischen dem beweglichen Schenkel und der Seitenwand eine Haltekette angeordnet ist. Diese Haltekette verhindert, dass das den Schenkel haltende Gelenk bzw. Filmscharnier überdehnt und beschädigt wird.

Vorteilhafterweise besteht die Haltekette aus einer Anschlussleiste an der Seitenwand und einer weiteren Anschlussleiste an dem beweglichen Schenkel, aus wenigstens einer Zwischenleiste und aus Filmscharnieren zwischen den Anschlussleisten und der Zwischenleiste. Eine derartige Haltekette hat den Vorteil, dass sie mit dem Kanalunterteil selbst einstückig extrudiert werden kann.

Gemäß einer bevorzugten Ausgestaltung der Erfindung weist die Haltekette einen Schnappeffekt auf. Dadurch ist sichergestellt, dass der bewegliche Schenkel beim Öffnen in die Offenstellung, beim Schließen in die Schließstellung springt und diese Positionen auch beibehält.

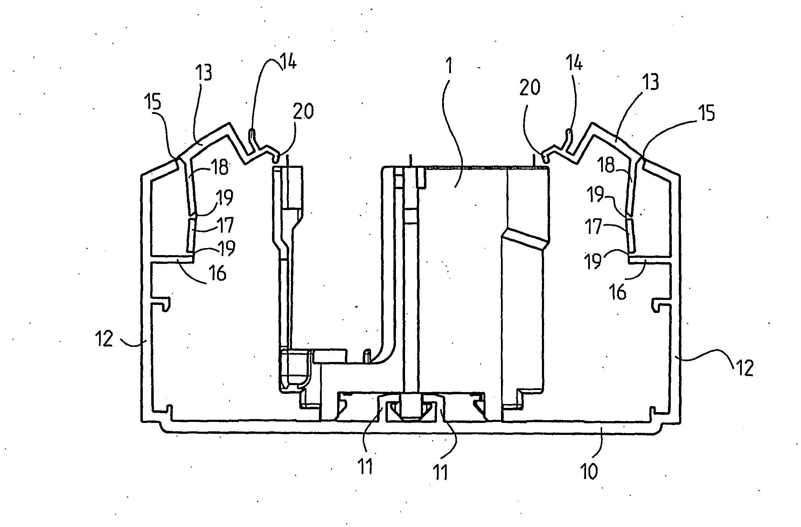

Anhand der Zeichnung soll die Erfindung in Form eines Ausführungsbeispiels näher erläutert werden.

Die Figur zeigt einen Querschnitt durch ein Unterteil eines Geräteeinbaukanals mit etwa C-förmigem Querschnitt. Das Kanalunterteil besteht aus einem Boden 10, an dessen Innenseite zwei Halteleisten 11 angeformt sind, zwei Seitenwänden 12 und zwei von den Seitenwänden 12 ausgehend nach innen gerichteten Schenkeln 13, an deren freien Enden Deckelhalteprofile 14 angeformt sind.

An den Halteleisten 11 ist eine Geräteeinbaudose 1 montiert, die ein Installationsgerät, beispielsweise einen Lichtschalter oder eine Steckdose, aufnehmen kann.

Die Schenkel 13 mit den Deckelhalteprofilen 14 sind mit Hilfe von Filmscharnieren 15 beweglich angelenkt. Sind die Schenkel 13 aufgeklappt, können durch den Spalt zwischen Geräteeinbaudose 1 und Deckelhalteprofil 14 Kabel und Leitungen eingelegt bzw. herausgenommen werden. Sind diese Verlegearbeiten erledigt, wird der Schenkel 13 wieder zurück geschwenkt und der Spalt geschlossen.

Es versteht sich, dass der Schenkel 13 in der geschlossenen Position fixiert werden muss. Dazu können im Bereich des Deckelhalteprofils 14 zusätzliche Halteprofile 20 vorgesehen werden, die mit der Geräteeinbaudose 1, den Installationsgeräten oder auch im Kanal montierten Trennwänden kooperieren.

Die Zeichnung zeigt eine verbesserte Ausführungsform. Hier ist zwischen dem schwenkbaren Deckel 13 und der Seitenwand 12 eine Haltekette vorgesehen, bestehend aus einer Anschlussleiste 16 an der Seitenwand 12, einer weiteren Anschlussleiste 18 an dem beweglichen Schenkel 13, einer Zwischenleiste 17 und Filmscharnieren 19 zwischen den Anschlussleisten 16, 18 und der Zwischenleiste 17. Diese Haltekette verhindert, dass der Schenkel 13 zu weit nach außen geschwenkt werden kann, wodurch das Filmscharnier 15 überdehnt und beschädigt würde.

In der Praxis wird die Haltekette so dimensioniert, dass sie einen Schnappeffekt aufweist. Dies bedeutet, dass der Schenkel 13 beim Öffnen seine Offenstellung, beim Schließen seine Schließstellung ohne Zwischenposition einnimmt und diese Stellungen auch ohne weiteres beibehält.

## Patentansprüche

1. Geräteeinbaukanal mit einem Unterteil, das einen etwa C-förmigen Querschnitt besitzt, im wesentlichen umfassend:
- einen Boden (10),
- gegebenenfalls Halteleisten (11) an der Innenseite des Bodens (10),
- zwei Seitenwände (12),
- zur Mitte hin abgewinkelte Schenkel (13) an den Seitenwänden (12)
- und Deckelhalteprofile (14) an den Schenkeln (13, 13'),
- der Abstand zwischen den Deckelhalteprofilen (14) entspricht der Breite der für den Kanaleinbau bestimmten Installationsgeräte oder Geräteeinbaudosen (1),
**gekennzeichnet durch** die Merkmale:
- die Schenkel (13) sind schwenkbar.

2. Kanal nach Anspruch 1, **gekennzeichnet durch** das Merkmal:
- die Schenkel (13) sind mittels Filmscharnier (15) angelenkt.

3. Kanal nach Anspruch 1 oder 2, **gekennzeichnet durch** die Merkmale:
- im Bereich des Deckelhalteprofils (14) ist ein zusätzliches Halteprofil (20) vorgesehen,
- das Halteprofil (20) kooperiert mit den im Kanal montierten Installationsgeräten oder Geräteeinbaudosen (1), mit Trennwänden oder dergleichen.

4. Kanal nach einem der Ansprüche 1 bis 3, **gekennzeichnet durch** das Merkmal:
- zwischen dem beweglichen Schenkel (13) und der Seitenwand (12) ist eine Haltekette (16, 17, 18, 19) angeordnet.

5. Kanal nach Anspruch 4, **gekennzeichnet durch** die Merkmale:
- die Haltekette besteht aus
- einer Anschlussleiste (16) an der Seitenwand (12),
- einer Anschlussleiste (18) an dem beweglichen Schenkel (13),
- wenigstens einer Zwischenleiste (17)
- und Filmscharnieren (19) zwischen den Anschlussleisten (16, 18) und der Zwischenleiste (17).

6. Kanal nach Anspruch 4 oder 5, **gekennzeichnet durch** das Merkmal:
- die Haltekette (16, 17, 18, 19) weist einen Schnappeffekt auf.
